(19) Europäisches Patentamt
European Patent Office
Office européen des brevets

(11) **EP 3 373 377 A1**

(12) **EUROPEAN PATENT APPLICATION**
published in accordance with Art. 153(4) EPC

(43) Date of publication:
**12.09.2018 Bulletin 2018/37**

(21) Application number: **16862046.6**

(22) Date of filing: **31.10.2016**

(51) Int Cl.:
**H01M 10/0567** *(2010.01)*  **H01M 4/13** *(2010.01)*
**H01M 4/133** *(2010.01)*  **H01M 4/134** *(2010.01)*
**H01M 4/36** *(2006.01)*  **H01M 4/38** *(2006.01)*
**H01M 4/48** *(2010.01)*  **H01M 4/62** *(2006.01)*
**H01M 10/052** *(2010.01)*  **H01M 10/058** *(2010.01)*

(86) International application number:
**PCT/JP2016/082351**

(87) International publication number:
**WO 2017/077986 (11.05.2017 Gazette 2017/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **06.11.2015 JP 2015218186**

(71) Applicant: **Hitachi, Ltd.**
**Tokyo 100-8280 (JP)**

(72) Inventors:
• **SEKI Eiji**
**Tokyo 100-8280 (JP)**
• **KIMURA Naoki**
**Tokyo 100-8280 (JP)**
• **SHIN Seogchul**
**Tokyo 100-8280 (JP)**

(74) Representative: **Beetz & Partner mbB**
**Patentanwälte**
**Steinsdorfstraße 10**
**80538 München (DE)**

(54) **LITHIUM ION SECONDARY BATTERY AND METHOD FOR MANUFACTURING LITHIUM ION SECONDARY BATTERY**

(57) The present invention provides a lithium ion secondary battery that can inhibit an electrolytic solution in the lithium ion secondary battery using a negative electrode active material containing Si from decomposing, improve cycle characteristics, and obtain both a high energy density and a longer service life, and a method for manufacturing the lithium ion secondary battery. A lithium ion secondary battery according to the present invention is characterized in that: the lithium ion secondary battery has a negative electrode (100), a positive electrode, a separator installed between the negative electrode (100) and the positive electrode, and an electrolytic solution; the electrolytic solution contains fluoroethylene carbonate; the negative electrode (100) has a negative electrode active material (104) having particles (101) containing silicon and particles (102) containing carbon and a film (103) being formed over a surface of the negative electrode active material (104) and containing fluorine; and a surface area of the particles (101) containing silicon and a content of fluorine contained in the film (103) satisfy the following expression (1):

$$0.005 \text{ g/m}^2 \leq (\text{Fluorine content (g) contained in film})/(\text{Surface area (m}^2) \text{ of particles containing silicon}) \leq 0.015 \text{ g/m}^2$$

...Expression (1).

EP 3 373 377 A1

# FIG. 3

(a)

(b)

## Description

Technical Field

The present invention relates to a lithium ion secondary battery and a method for manufacturing the lithium ion secondary battery.

Background Art

In recent years, electric vehicles (EVs) have been developed by various automobile makers to cope with the problems of global warming and fuel depletion, and a lithium ion secondary battery having a high energy density has been required as the power source.

In a lithium ion secondary battery, an active material containing silicon (Si) is expected as a negative electrode active material expected to have a particularly high energy density. Since the volume change of Si caused by charge and discharge is four times the volume change of graphite however, an electrode is likely to collapse by expansion and contraction during charge and discharge. Meanwhile, in general an electrolytic solution used in a lithium ion secondary battery is likely to decompose. One of the challenges of a lithium ion secondary battery is to prevent the deterioration of cycle characteristics caused by the expansion and contraction of the negative electrode active material above and the decomposition of an electrolytic solution.

A method for forming a stable SEI (Solid Electrolyte Interface) film by adding fluoroethylene carbonate (FEC) to an electrolytic solution in order to inhibit the electrolytic solution from decomposing has heretofore been proposed (for example, Patent Literature 1).

Citation List

Patent Literature

PTL 1: Japanese Unexamined Patent Application No. 2014-183043

Summary of Invention

Technical Problem

In recent years, a lithium ion secondary battery has been increasingly requited to improve battery characteristics such as cycle characteristics. Although the cycle characteristics can be prevented from deteriorating as stated above by adding FEC to an electrolytic solution, forming a stable SEI film, and thus inhibiting the electrolytic solution from decomposing, to prevent the deterioration of the cycle characteristics caused by the volume change of a negative electrode active material containing Si has not been sufficiently studied in prior art including Patent Literature 1.

An object of the present invention is, in view of the above situation, to provide: a lithium ion secondary battery that can inhibit an electrolytic solution in the lithium ion secondary battery using a negative electrode active material containing Si from decomposing, improve cycle characteristics, and obtain both a high energy density and a longer service life; and a method for manufacturing the lithium ion secondary battery.

Solution to Problem

The present invention, in order to attain the above object, provides a lithium ion secondary battery characterized in that: the lithium ion secondary battery has a negative electrode, a positive electrode, a separator installed between the negative electrode and the positive electrode, and an electrolytic solution; the electrolytic solution contains fluoroethylene carbonate; the negative electrode has a negative electrode active material having particles containing silicon and particles containing carbon and a film formed over a surface of the negative electrode active material and containing fluorine; and a surface area of the particles containing silicon and a content of fluorine contained in the film satisfy the following expression (1):
[Formula 1]

$$0.005 \text{ g/m}^2 \leq \text{(Fluorine content (g) contained in}$$

$$\text{film)/(Surface area (m}^2\text{) of particles containing silicon)} \leq$$

$$0.015 \text{ g/m}^2$$

$$\text{...Expression (1).}$$

Advantageous Effects of Invention

The present invention makes it possible to provide: a lithium ion secondary battery that can inhibit an electrolytic solution in the lithium ion secondary battery using a negative electrode active material containing Si from decomposing, improve cycle characteristics, and obtain both a high energy density and a longer service life; and a method for manufacturing the lithium ion secondary battery.

Brief Description of Drawings

    Figure 1 is an exploded view schematically showing a lithium ion secondary battery (multilayer laminated cell) according to the present invention.
    Figure 2 is an exploded perspective view schematically showing a stacked electrode group in a lithium ion secondary battery (multilayer laminated cell) according to the present invention.
    Figures 3 are schematic sectional views showing an example of a negative electrode constituting a lithium ion secondary battery according to the present invention.

Description of Embodiments

[Basic idea of present invention]

The present inventors have earnestly studied the improvement of the cycle characteristics of a lithium ion secondary battery using a negative electrode active material containing Si (hereunder referred to as an "Si series negative electrode active material"). As a result, it has been found that correlation among a surface area of an Si series negative electrode active material, an F content in an SEI film (hereunder referred to as an "F series film") formed over the surface of the negative electrode active material after first charge by adding FEC to an electrolytic solution and containing fluorine (F) derived from the FEC, and cycle characteristics is very high. That is, it has been found that it is possible to inhibit the decrease of a capacity caused by volume change and materialize high cycle characteristics while an electrolytic solution is inhibited from decomposing by controlling a surface area of an Si series negative electrode active material and a quantity (film thickness) of an F series film that is an inorganic material harder than an organic material. The present invention is based on the finding.

An embodiment according to the present invention is explained in detail hereunder.

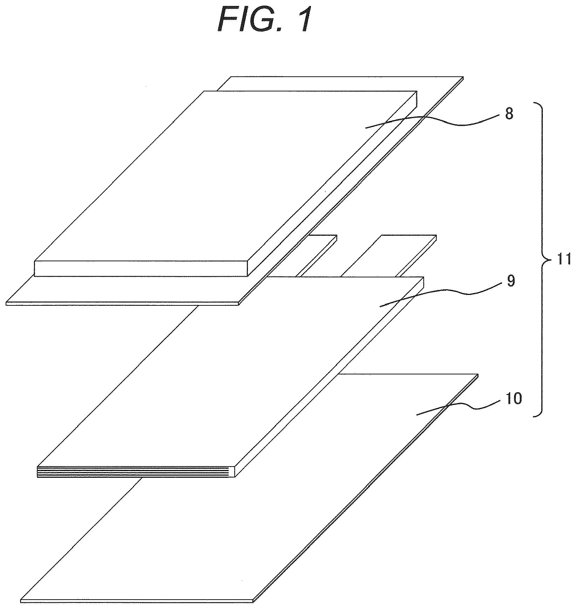

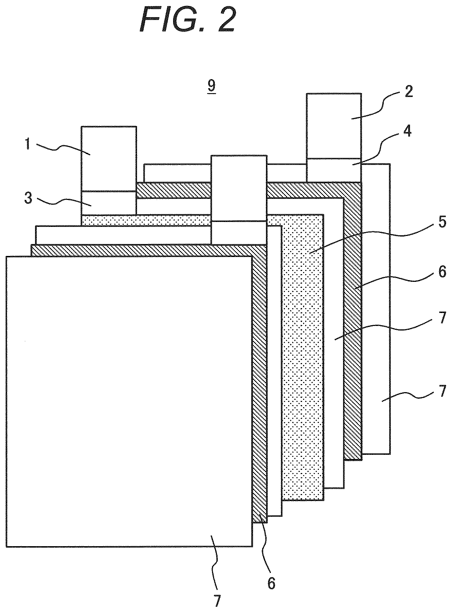

Firstly, the outline of a lithium ion secondary battery (multilayer laminated cell) according to the present invention is explained. Figure 1 is an exploded perspective view schematically showing a lithium ion secondary battery according to the present invention and Figure 2 is an exploded perspective view schematically showing a stacked electrode group in a lithium ion secondary battery according to the present invention. As shown in Figures 1 and 2, a laminated cell 11 is configured by interposing an electrode group (stacked electrode group) 9 between two laminated films 8 and 10. The electrode group 9 is formed by interposing separators 7 between a tabular positive electrode 5 and tabular negative electrodes 6. The positive electrode 5 and the negative electrodes 6 have active material mixture uncoated parts (a positive electrode uncoated part 3 and negative electrode uncoated parts 4) not coated with active material mixtures at parts of foils during processing. The positive electrode uncoated part 3 and the negative electrode uncoated parts 4 are bundled and joined by ultrasonic welding to a positive electrode terminal 1 and negative electrode terminals 2, which electrically connect the interior with the exterior of a battery. As the welding method, another welding method such as a resistance welding method may also be used. Here, in order to seal the interior and the exterior of a battery more airtightly, a thermal welding resin may be applied or attached to the sealing parts of the positive electrode terminal 1 and the negative electrode terminals 2 beforehand.

The laminated cell 11 is penetrated by the positive electrode terminal 1 and the negative electrode terminals 2 in the state of sealing and electrically insulating the electrode group 9 by applying thermal welding to the edges of the laminated films 8 and 10 for 10 seconds at 175°C. In the sealing, a liquid injection port of an electrolytic solution is formed by thermally welding the sides other than one side firstly and then sealing the remaining side by thermal welding while vacuum pressure is applied to the unsealed side after the electrolytic solution is injected.

The negative electrodes 6, the positive electrode 5, and the separators 7 are explained in detail hereunder.

(1) Negative electrode

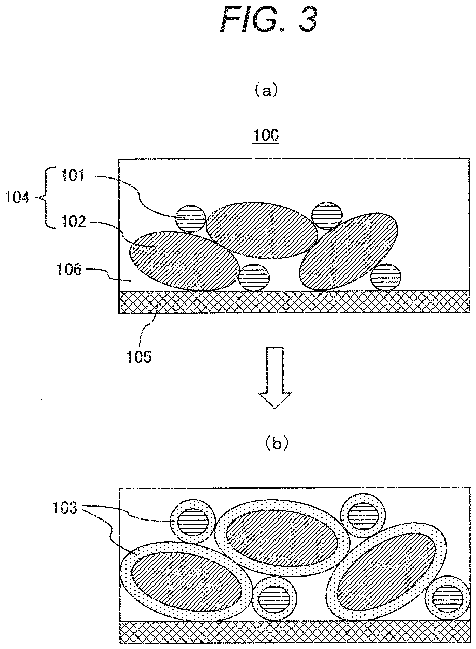

Firstly, the configuration of a negative electrode constituting a lithium ion secondary battery according to the present invention is explained. Figures 3 are schematic sectional views showing an example of a negative electrode constituting a lithium ion secondary battery according to the present invention. As shown in Figures 3, a negative electrode 100 has a negative electrode collector 105 and a negative electrode mixture layer 106 formed over the surface of the negative electrode collector 105 (Figure 1(a)). The negative electrode mixture layer 106 has a negative electrode active material 104 including particles 101 containing silicon and particles 102 containing carbon (C). A binder and a conductive additive may be contained further in the negative electrode mixture layer 106 although they are not shown in the figure.

An electrolytic solution in a lithium ion secondary battery according to the present invention contains FEC as an additive. By the FEC, an SEI film 103 is formed over the surface of the negative electrode active material 104 after the first charge of the lithium ion secondary battery (Figure 1(b)). Elements (fluorine (F), carbon (C), hydrogen (H), and oxygen (O)) constituting the FEC are contained in the SEI film derived from the FEC.

In the present invention, a surface area of the particles 101 containing Si (a total specific surface area of all the particles 101 containing Si and included in the negative electrode mixture layer 106 as the negative electrode active material 104) and an F content in the film 103 containing F are adjusted so as to satisfy the aforementioned expression (1). Here, the F content is an F content in the film 103 formed over both the particles 101 containing Si and the particles 102 containing C, which are contained in the negative electrode mixture layer 106 as the negative electrode active material 104.

A specific surface area of the particles 101 containing Si can be measured by a BET method. Further, a surface area can be adjusted by controlling the particle sizes of the particles 101 containing Si. The particle sizes can be controlled by selecting a synthesizing method of the particles 101 containing Si and classifying and pulverizing the particles 101 containing Si. Furthermore, an F content in the film 103 can be measured by ICP (Inductively Coupled Plasma) emission spectroscopy.

The particles 101 containing Si (Si series negative electrode active material) are not particularly limited but is preferably silicon oxide ($SiO_x$ ($0.5 \leq x \leq 1.5$)) or an alloy of silicon and a dissimilar metal element. Those are explained hereunder.

$SiO_x$ is usually in the state of dispersing fine particles of metal Si in particles of silicon dioxide ($SiO_2$). $SiO_x$ is manufactured by heating a mixture of $SiO_2$ particles and metal Si particles, generating a silicon monoxide gas, cooling the silicon monoxide gas, and thus precipitating amorphous silicon oxide particles. The amorphous silicon oxide particles are represented by a general expression $SiO_x$.

A silicon oxide used for a negative electrode active material in a lithium ion secondary battery according to the present invention, when represented by the general expression $SiO_x$, has x satisfying preferably the expression $1.0 \leq x \leq 1.5$ or more preferably the expression $1.0 \leq x \leq 1.2$. The proportion of oxygen in silicon oxide particles (a value of x) can be increased by heat-treating and oxidizing the silicon oxide particles obtained through the above process. In silicon oxide particles having x exceeding 1.5, however, the proportion of silicon dioxide generated by disproportionation reaction is large. Since silicon dioxide is inert, when such silicon oxide particles are used for the negative electrode active material in a lithium ion secondary battery, the silicon dioxide causes an irreversible capacity to increase and therefore is not preferable.

An Si alloy is generally in the state of dispersing fine particles of metal Si in particles of another metal element or in the state of dispersing another metal element in particles of Si. Another metal element constituting an alloy is preferably at least one kind selected from the group of aluminum (Al), titanium (Ti), manganese (Mn), iron (Fe), nickel (Ni), and copper (Cu). An Si alloy can be manufactured by being synthesized mechanically by a mechanical alloying method or by heating and cooling a mixture of Si particles and another metal element. The composition of an Si alloy is desirably 50:50 to 90:10 or more preferably 60:40 to 80:20 in terms of atomic ratio of Si to another metal element. As concrete examples of the alloy, $Si_{70}Ti_{30}$, $Si_{70}Ti_{10}Fe_{10}Al_{10}$, $Si_{70}Al_{30}$, $Si_{70}Ni_{30}$, $Si_{70}Cu_{30}$, $Si_{70}Fe_{30}$, $Si_{70}Ti_{30}$, $Si_{70}Mn_{30}$, $Si_{70}Ti_{15}Fe_{15}$, and $Si_{70}Al_{10}Ni_{20}$ are named.

In the present invention, as the negative electrode active material, particles 102 containing carbon are used in addition to the particles 101 containing Si. The particles 102 containing C are not particularly limited but a graphitic material such as natural graphite or artificial graphite can be used. Natural graphite is desirable from the viewpoint of cost but a substance the surface of which is covered with non-graphitizable carbon may also be used.

A mass mixture ratio of the particles 101 containing Si to the particles 102 containing carbon is preferably 20:80 to 90:10. When the mass mixture ratio of the particles containing Si is less than 20 mass%, a satisfactory energy density is not obtained. When the mass mixture ratio of the particles 101 containing Si is more than 90 mass%, a negative electrode expands excessively and is isolated electrically.

A negative electrode 6 can be manufactured by manufacturing negative electrode mixture slurry by dispersing the components of a negative electrode mixture layer into a solvent, coating a collector foil with the negative electrode mixture slurry, and applying press. The components of the negative electrode mixture layer preferably include a binder, a conductive additive, and a solvent in addition to the negative electrode active material stated earlier. The configurations of the materials other than the negative electrode active material are not particularly limited, but the binder may be preferably polyamideimide, polyamide, polyimide, or a mixture of those, or may also be a mixture binder of PVDF (PolyVinylidene DiFluoride) or SBR (Styrene-Butadiene Rubber) and a binder. Here, polyamideimide is not strictly defined and a mixture binder of polyimide and polyamideimide is also called "polyamideimide". Further, the conductive additive is preferably acetylene black.

As the solvent, NMP (N-Methylpyrrolidone), water, 2-butoxyethanol, butyl cellosolve, N,N-dimethylacetamide, or diethylene glycol diethyl ether is suitable. As the collector foil, in addition to an SUS foil having a low specific gravity, a high strength, and a cycle service life improvement effect, a copper foil is suitable from the viewpoint of cost.

A collector foil is coated with the negative electrode slurry and dried. The drying temperature is preferably not lower than 80°C to not higher than 120°C, or more preferably not lower than 90°C to not higher than 100°C. After the drying, the density is adjusted by roll press and a negative electrode is obtained. With regard to a density, preferably press is applied so that the pores of an electrode may account for about 20% to 40%. Successively, a negative electrode can be obtained by thermosetting the binder in vacuum or in nitrogen.

(2) Positive electrode

A positive electrode 5 can be manufactured by manufacturing positive electrode mixture slurry by dispersing the components of a positive electrode mixture layer into a solvent, coating the surface of a collector foil with the positive electrode mixture slurry, and applying press. The positive electrode mixture layer, similarly to the negative electrode mixture layer, preferably includes a positive electrode active material, a binder, a conductive additive, and a solvent. The positive electrode active material is not particularly limited as long as it is a lithium compound that can store and release lithium ions. For example, lithium transition metal composite oxides such as lithium manganese oxide, lithium cobalt oxide, lithium nickel oxide, and the like are named. They can be used alone or as a mixture of two or more kinds. The configurations of the binder, the conductive additive, and the solvent are similar to the negative electrode. As the collector foil, an aluminum (Ai) foil is suitable. A positive electrode can be obtained by coating a collector foil with the positive electrode slurry, drying the collector foil, successively adjusting a density by roll press, and thermosetting the binder.

(3) Separator

A separator is not particularly limited as long as it is a material that does not pass through lithium ions by thermal contraction. For example, polyolefin or the like is suitable. Polyolefin is characterized by mainly containing at least one kind of polyethylene and polypropylene but a substance that contains a heat-resistant resin such as polyamide, polyamideimide, polyimide, polysulfone, polyethersulfone, polyphenylsulfone, or polyacrylonitrile in the above material is also acceptable. Further, it is also possible to apply an inorganic filler layer over one surface or both surfaces. The inorganic filler layer is characterized by containing at least one kind of silicon dioxide ($SiO_2$), aluminum oxide ($Al_2O_3$), montmorillonite, mica, zinc oxide (ZnO), titanium oxide ($TiO_2$), barium titanate ($BaTiO_3$), and zirconium oxide ($ZrO_2$), but $SiO_2$ or $Al_2O_3$ is the most desirable from the viewpoint of cost and performance.

(4) Electrolytic solution

As an electrolytic solution, a substance obtained by mixing a known electrolyte such as $LiPF_6$ or $LiBF_4$ used in a battery for example with at least one kind of non-aqueous solvent selected from the group of ethylene carbonate, propylene carbonate, butylene carbonate, dimethyl carbonate, ethyl methyl carbonate, diethyl carbonate, γ-butyrolactone, γ-valerolactone, methyl acetate, ethyl acetate, methyl propionate, tetrahydrofuran, 2-methyltetrahydrofuran, 1,2-dimethoxyethane, 1-ethoxy-2-methoxyethne, 3-methyltetrahydrofuran, 1,2-dioxane, 1,3-dioxane, 1,4-dioxane, 1,3-dioxolane, 2-methyl-1,3-dioxolane, and 4-methyl-1,3-dioxolane for example can be used. Then FEC is added as an essential component to an electrolytic solution in a lithium ion secondary battery according to the present invention. The quantity of added FEC is adjusted so as to satisfy the expression (1) as described earlier.

Example

Lithium ion secondary batteries of Examples 1 to 8 and Comparative Examples 1 to 4 were manufactured and the battery characteristics (initial resistance (DCR) and capacity retention rate at 100 cycles) were evaluated.

(Manufacturing of lithium ion battery)

A lithium ion secondary battery (multilayer laminated cell) shown in Figures 1 and 2 was manufactured by arranging a negative electrode, a positive electrode, a separator, and an electrolytic solution as follows.

As a negative electrode active material, an Si alloy ($Si_{70}Ti_{30}$) or $SiO_x$ (x=1.0) and natural graphite ($d_{002}$ is 3.356 Å or less, Lc(002) is 1,000 Å or more, and La(110) is 1,000 Å or more) were used. The specific surface areas of the used $Si_{70}Ti_{30}$ and $SiO_x$ are in the range of 1.38 to 6.19 $m^2$/g. The configurations of the negative electrode active materials of the lithium ion secondary batteries of Examples 1 to 8 and Comparative Examples 1 to 4 are described in Table 1 shown below. A negative electrode active material stated above, polyamideimide as a binder, and acetylene black as a conductive additive were weighed so that the mass ratio may be 92:5:3 in this order, NMP was added as a solvent so that the viscosity may be in the range of 5,000 to 8,000 mPa, and they were mixed with a planetary mixer. A copper foil was coated with the obtained negative electrode slurry by using a desk-top comma coater. With regard to a coating weight, a negative electrode coating weight was adjusted in the range of 10 $g/m^2$ or more to 120 $g/m^2$ or less so that the capacity ratio of a positive electrode that will be described later to a negative electrode may be 1.0 when the coating weight of the positive electrode is 240 $g/m^2$. Successively, the coated copper foil was subjected to primary drying through a drying furnace at 90°C and pressed by roll press so that the density may be in the range of 1.3 to 1.5 $g/cm^3$ in the case of a negative electrode containing $SiO_x$ and in the range of 2.0 to 2.4 $g/cm^3$ in the case of a negative electrode containing $Si_{70}Ti_{30}$. After the roll press, a negative electrode 6 was obtained by thermosetting polyamideimide for one hour at 300°C in vacuum.

$LiNi_{1/3}Mn_{1/3}Co_{1/3}O_2$ as a positive electrode active material, PVDF as a binder, and a carbon material as a conductive additive were weighed so that the mass ratio may be 90:5:5 in this order, NMP was added as a solvent so that the viscosity may be in the range of 5,000 to 8,000 mPa, they were mixed, and thus a positive electrode slurry was manufactured. An aluminum foil was coated with the obtained positive electrode slurry. The coating weight of the mixture was set at 240 $g/m^2$. After the coating, the coated aluminum foil was dried at 120°C, then the density was adjusted to 3.0 $g/cm^3$ by roll press, polyamideimide was thermally hardened for one hour at 300°C in vacuum, and thus a positive electrode 5 was obtained.

As the separator 7, a three-layered film (film thickness: 25 $\mu$m) having a polyethylene layer between polypropylene layers was used. As the electrolytic solution, a liquid obtained by using an electrolyte of 1 $MLiPF_6$ and dissolving the electrolyte in the solvent of EC (ethyl carbonate) and EMC (ethyl methyl carbonate) having a content ratio of 1:3 in vol% was used and moreover a predetermined quantity of FEC was added. In Examples 1 to 8, the quantity of added FEC was adjusted so that the value of the expression (1) may be in the range of 0.005 to 0.015. As an example, when FEC of 0.096 g (on this occasion, the F content in FEC is 0.017 g) is added, the F content in the film formed over the surface of the negative electrode active material after first charge is 0.017 g (Example 1). The F quantity in the negative electrode film is nearly identical to the F quantity contained in FEC.

(Measurement of F content in negative electrode film)

After a manufactured laminated cell was subjected to constant current charge at a voltage of 4.2 V and an electric current of 0.5 CA, then constant voltage charge for 2 hours, and further, as discharge, constant current discharge at a voltage of 1.5 V and an electric current of 0.5 CA, the laminated cell was decomposed and the negative electrode was taken out. Successively, in order to remove the electrolytic solution, the negative electrode was washed by dimethyl carbonate (DMC). The washed negative electrode was dried, a fixed quantity of the mixture was ripped off, the ripped mixture was added to aqua regia obtained by mixing concentrated hydrochloric acid and concentrated nitric acid at a volume ratio of 3 to 1, the F series film component was dissolved, and the F quantity was measured by ICP emission spectroscopy. From the value, the F content in the film of the whole negative electrode mixture layer was calculated. The calculated values are described together in Table 1 shown below.

[Table 1]

Table 1: Configurations of negative electrode active materials in lithium ion secondary batteries of Examples 1 to 8 and Comparative Examples 1 to 4

| | Configuration of negative electrode active material | | | | | |
|---|---|---|---|---|---|---|
| | Particles containing Si | Particles containing C | Mass mixture ratio | Fluorine content (g) in film (A) | Surface area ($m^2$) of particles containing silicon (B) | (A)/(B) ($g/m^2$) |
| Example 1 | $Si_{70}Ti_{30}$ | Graphite | 50:50 | 0.017 | 3.44 | 0.005 |
| Example 2 | $Si_{70}Ti_{30}$ | Graphite | 50:50 | 0.038 | 3.44 | 0.011 |
| Example 3 | $Si_{70}Ti_{30}$ | Graphite | 50:50 | 0.052 | 3.44 | 0.015 |
| Example 4 | $SiO_x$ | Graphite | 50:50 | 0.038 | 3.44 | 0.011 |
| Example 5 | $Si_{70}Ti_{30}$ | Graphite | 20:80 | 0.015 | 1.38 | 0.011 |
| Example 6 | $Si_{70}Ti_{30}$ | Graphite | 90:10 | 0.070 | 6.19 | 0.011 |
| Example 7 | $SiO_x$ | Graphite | 20:80 | 0.015 | 1.38 | 0.011 |
| Example 8 | $SiO_x$ | Graphite | 90:10 | 0.070 | 6.19 | 0.011 |
| Comparative Example 1 | $Si_{70}Ti_{30}$ | Graphite | 50:50 | 0.010 | 3.44 | 0.003 |
| Comparative Example 2 | $Si_{70}Ti_{30}$ | Graphite | 50:50 | 0.070 | 3.44 | 0.020 |
| Comparative Example 3 | $SiO_x$ | Graphite | 50:50 | 0.010 | 3.44 | 0.003 |
| Comparative Example 4 | $SiO_x$ | Graphite | 50:50 | 0.070 | 3.44 | 0.020 |

(Measurement of initial resistance (DCR) and cycle capacity retention rate)

An initial resistance (DCR) was measured by using a manufactured laminated cell. Further, constant current charge was applied at a voltage of 4.2 V and an electric current of 0.5 CA, constant voltage charge was applied for 2 hours, as discharge, constant current discharge was applied at a voltage of 1.5 V and an electric current of 0.5 CA, the above procedure was repeated 100 times, and a retention rate between the first discharge capacity and the 100th discharge capacity was measured as a capacity retention rate of the laminated cell after the 100 cycles. The evaluation results of initial DCRs and capacity retention rates at 100 cycles are shown in Table 2.

[Table 2]

Table 2: Evaluation results of lithium ion secondary batteries of Examples 1 to 8 and Comparative Examples 1 to 4

| | Initial DCR ($m\Omega$) | Capacity retention rate (%) at 100 cycles |
|---|---|---|
| Example 1 | 115 | 75 |
| Example 2 | 120 | 80 |
| Example 3 | 125 | 83 |
| Example 4 | 115 | 85 |
| Example 5 | 101 | 90 |
| Example 6 | 130 | 79 |
| Example 7 | 96 | 93 |
| Example 8 | 125 | 85 |

(continued)

|  | Initial DCR (mΩ) | Capacity retention rate (%) at 100 cycles |
|---|---|---|
| Comparative Example 1 | 140 | 20 |
| Comparative Example 2 | 145 | 60 |
| Comparative Example 3 | 135 | 25 |
| Comparative Example 4 | 139 | 65 |

As shown in Tables 1 and 2, in Examples 1 to 8 according to the present invention, by adding FEC to an electrolytic solution, the decomposition of the electrolytic solution was inhibited, the value of an initial DCR was inhibited (130 mΩ or less), and a good cycle capacity retention rate (75% or more) was obtained. In contrast, in Comparative Examples 1 to 4 having configurations deviating from the range of the present invention, it was found that the value of an initial DCR was high (135 mΩ or more) and a cycle capacity retention rate was low (65% or less).

In Comparative Examples 1 and 3, it was estimated that, because a value defined by the expression (1) was less than 0.005, the quantity of an F series film was small and the capacity reduction caused by volume change was large. Meanwhile, in Comparative Examples 2 and 4, it is estimated that, because a value defined by the expression (1) exceeds 0.015, the quantity of an F series film is large, the conductivity of an active material lowers by the influence, and the capacity reduction is large.

As explained above, it has been verified that the present invention makes it possible to provide: a lithium ion secondary battery that can inhibit an electrolytic solution in the lithium ion secondary battery using a negative electrode active material containing Si from decomposing, improve cycle characteristics, and obtain both a high energy density and a longer service life; and a method for manufacturing the lithium ion secondary battery.

Meanwhile, the present invention is not limited to the above examples and includes various modified examples. For example, the above examples are explained in detail in order to make the present invention easier to understand and the present invention is not necessarily limited to the examples having all the configurations explained. Further, it is possible to replace a part of the configuration of an example with the configuration of another example or add the configuration of an example to the configuration of another example. Furthermore, another configuration can be added to, deleted from, or replaced with a part of the configuration of an example. For example, although a multilayer laminated cell is used as a structure of a lithium ion secondary battery in the above explanation, the effects similar to the above examples can be obtained even in the case of a winding structure or being contained in a metal can.

Reference Signs List

1...positive electrode terminal,
2...negative electrode terminal,
3...positive electrode uncoated part
4...negative electrode uncoated part
5...positive electrode
6,100 ... negative electrode
7...separator
8 ... laminated film (case side)
9...electrode group
10...laminated film (lid side)
11...laminated cell
101...particles containing Si
102...particles containing C
103...film containing F
104...negative electrode active material
105...negative electrode collector

**Claims**

1. A lithium ion secondary battery comprising a negative electrode, a positive electrode, a separator installed between the negative electrode and the positive electrode, and an electrolytic solution,
wherein the electrolytic solution contains fluoroethylene carbonate;
the negative electrode has a negative electrode active material having particles containing silicon and particles containing carbon and a film formed over a surface of the negative electrode active material and containing fluorine; and
a surface area of the particles containing silicon and a content of fluorine contained in the film satisfy the following expression (1):
[Formula 1]

$$0.005 \text{ g/m}^2 \leq \text{(Fluorine content (g) contained in}$$
$$\text{film)/(Surface area (m}^2) \text{ of particles containing silicon)} \leq$$
$$0.015 \text{ g/m}^2$$

$$\text{...Expression (1).}$$

2. The lithium ion secondary battery according to Claim 1, wherein the film containing fluorine contains an element constituting the fluoroethylene carbonate.

3. The lithium ion secondary battery according to Claim 1, wherein the particles containing silicon are $SiO_x$ ($0.5 \leq x \leq 1.5$) or an alloy of silicon and a dissimilar metal element.

4. The lithium ion secondary battery according to Claim 3, wherein the dissimilar metal element is at least one kind selected from the group of aluminum, titanium, manganese, iron, nickel, and copper.

5. The lithium ion secondary battery according to any one of Claims 1 to 4,
wherein the particles containing silicon are an alloy of silicon and a dissimilar metal element;
the particles containing carbon are graphite; and
a mass mixture ratio of the alloy to the graphite is 20:80 to 90:10.

6. The lithium ion secondary battery according to any one of Claims 1 to 3,
wherein the particles containing silicon are $SiO_x$ ($0.5 \leq x \leq 1.5$) ;
the particles containing carbon are graphite; and
a mass mixture ratio of the $SiO_x$ to the graphite is 20:80 to 90:10.

7. The lithium ion secondary battery according to any one of Claims 1 to 6,
wherein the negative electrode has a negative electrode collector and a negative electrode mixture layer formed over the surface of the negative electrode collector;
the negative electrode mixture layer has the negative electrode active material and a binder; and
the binder is polyamide, polyimide, or polyamideimide.

8. A method for manufacturing a lithium ion secondary battery having a negative electrode, a positive electrode, a separator installed between the negative electrode and the positive electrode, and an electrolytic solution,
wherein the negative electrode has a negative electrode active material having particles containing silicon and particles containing carbon;
a film containing fluorine derived from fluoroethylene carbonate is formed over the surface of the negative electrode active material after the first charge of the lithium ion secondary battery by adding the fluoroethylene carbonate to the electrolytic solution; and
a surface area of the particles containing silicon and a content of fluorine contained in the film satisfy the following expression (1):
[Formula 2]

$$0.005 \text{ g/m}^2 \leq \text{(Fluorine content (g) contained in}$$

$$\text{film)/(Surface area (m}^2\text{) of particles containing silicon)} \leq$$

$$0.015 \text{ g/m}^2$$

...Expression (1).

9. The method for manufacturing a lithium ion secondary battery according to Claim 8, wherein the film containing fluorine contains an element constituting the fluoroethylene carbonate.

10. The method for manufacturing a lithium ion secondary battery according to Claim 8, wherein the particles containing silicon are $SiO_x$ ($0.5 \leq x \leq 1.5$) or an alloy of silicon and a dissimilar metal element.

11. The method for manufacturing a lithium ion secondary battery according to Claim 10, wherein the dissimilar metal element is at least one kind selected from the group of aluminum, titanium, manganese, iron, nickel, and copper.

12. The method for manufacturing a lithium ion secondary battery according to any one of Claims 8 to 11,
    wherein the particles containing silicon are an alloy of silicon and a dissimilar metal element;
    the particles containing carbon are graphite; and
    a mass mixture ratio of the alloy to the graphite is 20:80 to 90:10.

13. The method for manufacturing a lithium ion secondary battery according to any one of Claims 8 to 10,
    wherein the particles containing silicon are $SiO_x$ ($0.5 \leq x \leq 1.5$) ;
    the particles containing carbon are graphite; and
    a mass mixture ratio of the $SiO_x$ to the graphite is 20:80 to 90:10.

14. The method for manufacturing a lithium ion secondary battery according to any one of Claims 8 to 13,
    wherein the negative electrode has a negative electrode collector and a negative electrode mixture layer formed over the surface of the negative electrode collector;
    the negative electrode mixture layer has the negative electrode active material and a binder; and
    the binder is polyamide, polyimide, or polyamideimide.

# FIG. 1

## FIG. 2

# FIG. 3

(a)

<u>100</u>

(b)

## INTERNATIONAL SEARCH REPORT

| International application No. |
|---|
| PCT/JP2016/082351 |

**A. CLASSIFICATION OF SUBJECT MATTER**
*H01M10/0567*(2010.01)i, *H01M4/13*(2010.01)i, *H01M4/133*(2010.01)i, *H01M4/134* (2010.01)i, *H01M4/36*(2006.01)i, *H01M4/38*(2006.01)i, *H01M4/48*(2010.01)i, *H01M4/62*(2006.01)i, *H01M10/052*(2010.01)i, *H01M10/058*(2010.01)i
According to International Patent Classification (IPC) or to both national classification and IPC

**B. FIELDS SEARCHED**

Minimum documentation searched (classification system followed by classification symbols)
H01M10/0567, H01M4/13, H01M4/133, H01M4/134, H01M4/36, H01M4/38, H01M4/48, H01M4/62, H01M10/052, H01M10/058

Documentation searched other than minimum documentation to the extent that such documents are included in the fields searched
Jitsuyo Shinan Koho　　　　1922-1996　Jitsuyo Shinan Toroku Koho　1996-2016
Kokai Jitsuyo Shinan Koho　1971-2016　Toroku Jitsuyo Shinan Koho　1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2013/99263 A1  (Panasonic Corp.), 04 July 2013 (04.07.2013), | 1-3,6,8-10, 13 |
| Y | claims; paragraphs [0006] to [0008], [0010], [0013] to [0015], [0018], [0021], [0023] to [0025], [0033]; examples & US 2014/0322591 A1 claims; paragraphs [0006] to [0008], [0010], [0014] to [0016], [0019], [0022], [0024] to [0026], [0035]; examples & CN 103947029 A | 4,5,7,11,12, 14 |
| X | JP 2015-64983 A  (Toshiba Corp.), 09 April 2015 (09.04.2015), | 1-3,6-10,13, 14 |
| Y | claims; paragraphs [0027] to [0037], [0043]; examples & US 2015/0086862 A1 claims; paragraphs [0042] to [0053]; examples | 4,5,11,12 |

☒ Further documents are listed in the continuation of Box C. ☐ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 November 2016 (22.11.16) | 06 December 2016 (06.12.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
|---|
| PCT/JP2016/082351 |

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2015/132856 A1  (Hitachi Automotive Systems, Ltd.), 11 September 2015 (11.09.2015), claims; paragraphs [0016] to [0024]; examples; comparative examples (Family: none) | 4,5,7,11,12, 14 |
| X | JP 2007-87796 A  (Matsushita Electric Industrial Co., Ltd.), 05 April 2007 (05.04.2007), claims; paragraphs [0011] to [0013], [0017]; examples (Family: none) | 1-5,7-12,14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014183043 A